# EUROPEAN PATENT SPECIFICATION

(11) **EP 2 103 707 B1**
(45) Date of publication and mention of the grant of the patent: **16.11.2011**
(21) Application number: 09153671.4
(22) Date of filing: 25.02.2009
(51) Int. Cl.: C23C 8/12, C23C 8/24, F16C 33/12, F16C 33/14, C23C 8/28, F16C 23/04

(54) **An aerospace bearing component**
Flugzeuglagerelement
Composant de palier aérospatial

(30) Priority: 20.03.2008 GB 0805224; 24.11.2008 GB 0821332
(43) Date of publication of application: 23.09.2009
(73) Proprietor: Minebea Co. Ltd., Kitasaku-gun Nagano 389-0293 (JP)
(72) Inventor: Smith, Paul Raymond, Dr., Lincoln, Lincolnshire LN6 3RA (GB); Matthews, Allan, Sheffield S1 3JD (GB); Leyland, Adrian, Sheffield S1 3JD (GB)
(74) Representative: Hoarton, Lloyd Douglas Charles

(56) References cited:
- EP-A- 0 905 271
- EP-A- 1 582 756
- EP-A- 1 849 882
- WO-A-99/04055
- WO-A-2004/007788
- US-A- 4 687 487
- US-A- 4 848 934
- US-A- 5 316 594

## Description

THE PRESENT INVENTION relates to an aerospace bearing component and, more particularly, to an aerospace bearing.

Metal-to-metal spherical bearings are used in the aerospace industry and have particular application to landing gear bearings in aircraft. Conventional materials used in the production of landing gear metal-to-metal bearings are stainless steel and copper alloy for the inner and outer races (or the ball and outer housing, as appropriate). These materials are used because they do not gall in areas where no lubricant is present. However, these are relatively heavy materials, so solutions have been sought in the past to use more lightweight materials, more suitable to the aerospace industry. In this respect, it is possible to replace such relatively heavily metals on a strength basis with titanium alloy bearings which are approximately 40% lighter than those of their stainless and copper alloy counterparts. Although there is a significant weight-saving, these materials tend to gall very quickly under the loading conditions experienced in landing gears. US 4,848,934 gives an example of a titanium alloy bearing. Since a titanium alloy is too soft for metal-to-metal contact, it is provided with a hard coating of chromium oxide.

Other coatings have been investigated but considerable problems are encountered with the adhesion of the hard coating to the relatively soft titanium alloy.

The use of chromium oxide and chromium plating techniques are environmentally unfriendly and entail considerable manufacturing costs so it is preferred not to use chromium oxide or chromium plating techniques.

GB 2,412,701 provides a metal-to-metal bearing wherein one of the materials comprises a titanium alloy having a diffusion zone near its surface. GB 2,412,701 only discloses the use of nitrogen in creating the diffusion zone.

It has been found that the use of a nitrogen diffusion zone, as disclosed in GB 2,412,701, provides a relatively shallow nitrogen diffusion zone, in the region of 20 µm (micrometers). In other words, the nitrogen diffusion zone only penetrates the surface of the titanium substrate by around 20 µm. Such a depth limits the amount of pressure that such bearings are able to withstand. For example, an aerospace bearing having a nitrogen diffusion zone may only be rated up to 80 MPA.

There is a requirement in the industry to provide a lightweight aerospace bearing which Is capable of withstanding pressures higher than those of known aerospace bearings. Especially with the advent of larger and heavier aircraft, there is a need for aerospace bearings which are capable of withstanding pressures much higher than 80 MPA.

EP 1849882 A1 discloses an aerospace bearing component with a surface hardened by oxygen diffusion

EP0905271 discloses a component of a decorative item having a first layer nearest the surface, diffused with a mixture of nitrogen and oxygen in solid solution. The second, deeper layer, is diffused with oxygen in solid solution.

Accordingly, the present invention provides an aerospace bearing component according to the claims

The benefit of providing an oxygen diffusion zone, as opposed to a nitrogen diffusion zone known from GB 2,412,701, is that a much deeper diffusion zone can be achieved, bringing about a greater surface hardness and lower wear rate of the bearing component. Moreover, an aerospace bearing component having an oxygen diffusion zone may be capable of withstanding pressures in excess of 80 MPA. It is thought that an aerospace bearing component having an oxygen diffusion zone and a PVD coating and suitable run-in may withstand pressures of up to, or in excess of, 270 MPA.

Providing a metal component with an oxygen diffusion zone is known in the art, but it has not previously been known in the aerospace Industry, especially not in the aerospace bearing component industry. Oxygen diffusion zones have previously been discounted by the skilled person as being applicable to the bearing industry because the oxygen diffusion process is known to create a separate oxide layer on the surface of the oxygen diffused component. When the component is comprised of titanium, the oxide layer comprises a titanium oxide (Ti0₂) rutile. Such a titanium oxide rutile layer may have a depth of in the region of 0.5-1 µm

The presence of an oxide layer is disadvantageous in the bearing component field because abrasive particulate matter from the oxide layer may break away from the surface and cause increased wear and galling of the bearing surfaces within the bearing component. The use of an oxygen diffusion zone in the bearing field has previously been discounted for these reasons.

The benefit of providing a nitrogen diffusion zone on or within the surface of the aerospace bearing component is that the disadvantageous oxide layer may substantially be reduced or eliminated. In aerospace bearing component embodying the present invention is manufactured by first providing an oxygen diffusion zone; and then subsequently a nitrogen diffusion zone on top of the oxygen diffusion zone.

In one embodiment, at least a part of the nitrogen diffusion zone is interstitial with at least a part of the oxygen diffusion zone. The benefit of such an arrangement is that the nitrogen diffusion zone serves to "cap" the oxygen diffusion zone. The nitrogen diffusion zone further enhances the hardness of the bearing surface.

The synergistic benefit brought about by the use of both an oxygen and nitrogen diffusion zone is that the oxygen diffusion zone allows deep penetration of the diffusion zone into the surface of the bearing component - thereby allowing the bearing component to withstand higher pressures - and the provision of a nitrogen diffusion zone further increases the hardness of the bearing surface and increases the wear resistance of the resultant bearing surface.

It has also been found that, during manufacture of an aerospace bearing component with both an oxygen and nitrogen diffusion zone, the step of providing the nitrogen diffusion zone conveniently acts substantially to reduce or eliminate the oxide layer caused during the step of providing the oxygen diffusion zone. Therefore, an aerospace bearing component embodying the present invention having an oxygen diffusion zone and a nitrogen diffusion zone on or within its surface may have substantially no oxide (eg rutile) layer. The synergistic benefit is that the advantages of having an oxygen diffusion zone may be gained whilst eliminating the disadvantages associated therewith. Not only does the existence of the nitrogen diffusion zone serve to reduce or remove the oxide layer, it also serves to harden the bearing surface and further to provide an adequate surface to which a coating may be adhered.

Preferably, the depth of the diffusion zone is in the range of 21 to 100 µm. Advantageously, the depth may be in the range of 40 µm to 70 µm. Conveniently, the depth may be substantially 60 µm. By "diffusion zone" is meant either the oxygen diffusion zone on its own or the combination of the oxygen and nitrogen diffusion zone. It will be appreciated that if the nitrogen diffusion zone is interstitial with at least a part of the oxygen diffusion zone, the effective depth of the combination will substantially be the same as the effective depth of the oxygen diffusion zone itself.

Preferably, the depth of the coating is in the range of 0.1 µm to 50 µm. Advantageously, the depth may be in the range 0.1 µm to 25 µm. Conveniently, the depth may be in the range 2 µm to 4 µm.

The coating may comprise a first layer of coating, on which is provided a second layer of coating. In one embodiment, the material of the first coating layer is selected so as to provide good adhesion to the respective underlying diffusion zone and the material of the second coating layer is selected so as to provide a good bearing surface.

The benefit of such a two-layer arrangement is that the first layer acts as an intermediate coating layer and thus the top (second) coating layer is less likely to break away from (become detached from) the underlying diffusion zone. Thus, the material of the first coating layer may be selected so that it adheres well to the underlying nitrogen/oxygen diffusion zone, without particular regard for the material's tribological properties..Conversely, the material of the second coating layer is selected so as to provide a good bearing surface but little or no regard needs to be given to how that material of the second coating layer adheres to a diffusion zone. Nevertheless, it is preferable that the material of the second coating layer is selected so as to adhere well to the material of the first coating layer.

At least one of the coating layers comprises at least one of titanium nitride, chromium nitride, tungsten carbide graphite, titanium aluminium nitride and chromium aluminium nitride.

In one embodiment, the material of the first coating layer is one of chromium nitride (CrN), titanium nitride (TiN) and chromium aluminium nitride (CrAIN); and the material of the second coating layer is tungsten carbide graphite (WCC).

Any one or all of the coating and/or coating layers may be applied by at least one of physical vapour deposition (PVD) and chemical vapour deposition (CVD).

In one embodiment, the aerospace bearing components have a surface roughness in the range of 0.1 to 0.7 Ra. Preferably, the surface roughness is in the range of 0.2 to 0.4 Ra. Conveniently, the surface roughness is in the range of 0.25 to 0.35. Advantageously, the surface roughness is substantially 0.3 Ra.

The present invention further provides an aerospace component as defined in the claims.

The aerospace bearing component may comprise an aerospace bearing housing, a ball of an aerospace bearing, an inner race of an aerospace bearing or an outer race of an aerospace bearing

In one embodiment, the present invention provides an aerospace bearing comprising a housing and a ball within the housing, at least one of the housing and ball comprising an aerospace bearing component according to the present invention.

The present invention will now be further described, by way of example only, with reference to the accompanying figures in which:
FIGURE 1 illustrates a cross-sectional view of an aerospace bearing arrangement not embodying the present invention;
FIGURE 2 is a detail view of the interface between the bearing housing and the ball of the bearing of Figure 1;
FIGURE 3 is a detail of the interface between the bearing housing and the ball of another bearing embodying the present invention;
FIGURE 4 is a detail of the interface between the bearing housing and the ball of yet another bearing embodying the present invention;
FIGURE 5 is a detail of a coating of a bearing embodying the present Invention.
Figure 6 illustrates a schematic of the apparatus used to carry out the triode plasma oxidation process (TPO) according to the invention.
Figure 7 is a chart showing the surface roughness (Rₐ) obtained after TPO in Ti-6Al-4V at 600, 650 and 700°C.
Figure 8 is a chart showing Knoop microhardness measured at the surface of TPO-treated Ti-6Al-4V samples as a function of indentation load and redacted at 600, 650 and 700°C.
Figure 9 is a chart showing Knoop microhardness profiles obtained for unprocessed and TPO-treated Ti-6Al-4V samples as a function of depth and treated at 600, 650.

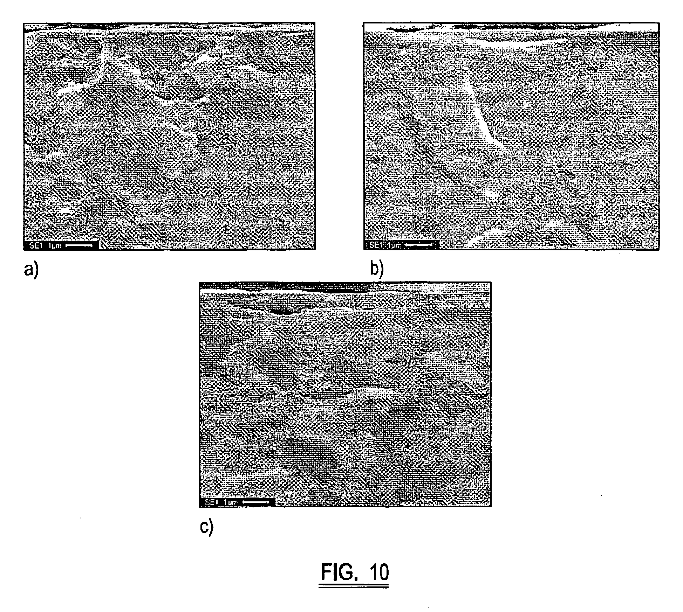

Figure 10 shows SEM photomicrographs of top oxide layer formed after TPO at (a) 600°C, (b) 650°C and (c) TPO at 700°C.

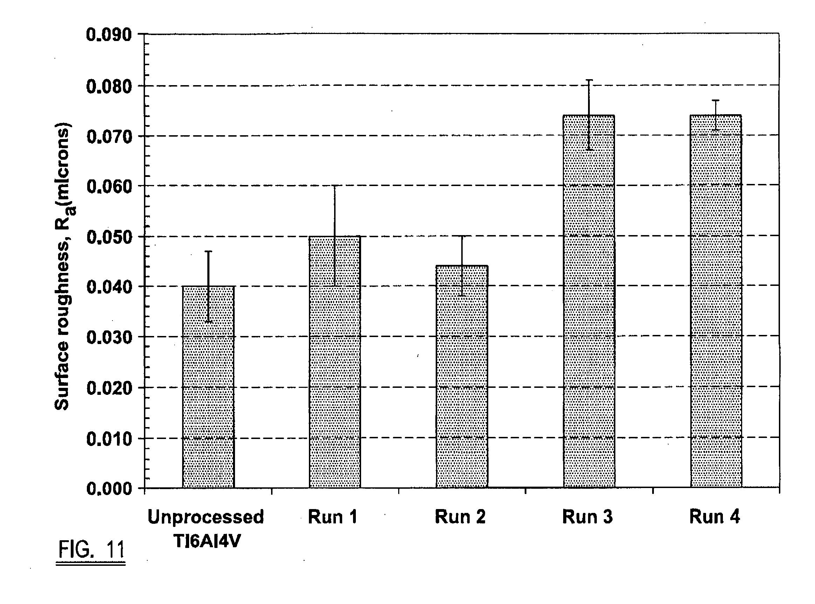

Figure 11 is a chart showing the surface roughness (Rₐ) of Ti-6Al-4V in unprocessed condition and after TPO treatments.

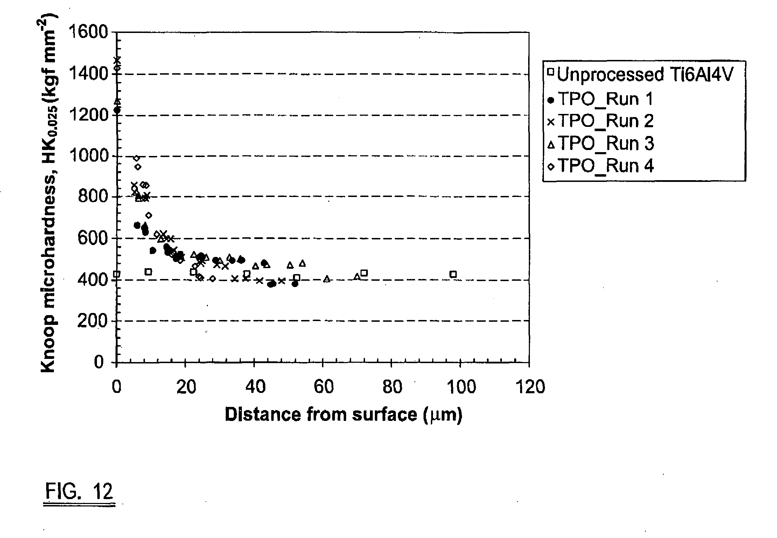

Figure 12 is a chart showing Knoop microhardness profiles obtained for Ti-6AI-4V in unprocessed condition and after TPO treatments
Figure 13 is a chart showing critical adhesion loads of PVD TiN coating on (a) unprocessed Ti-6Al-4V, (b) standard TPO-treated Ti-6Al-4V with constant oxygen flow, having a top TiO₂-rutlle oxide layer and (c) pulsed TPO-treated Ti-6Al-4V samples, subjected to pulsed TPO followed by plasma heating in argon or argon and nitrogen.

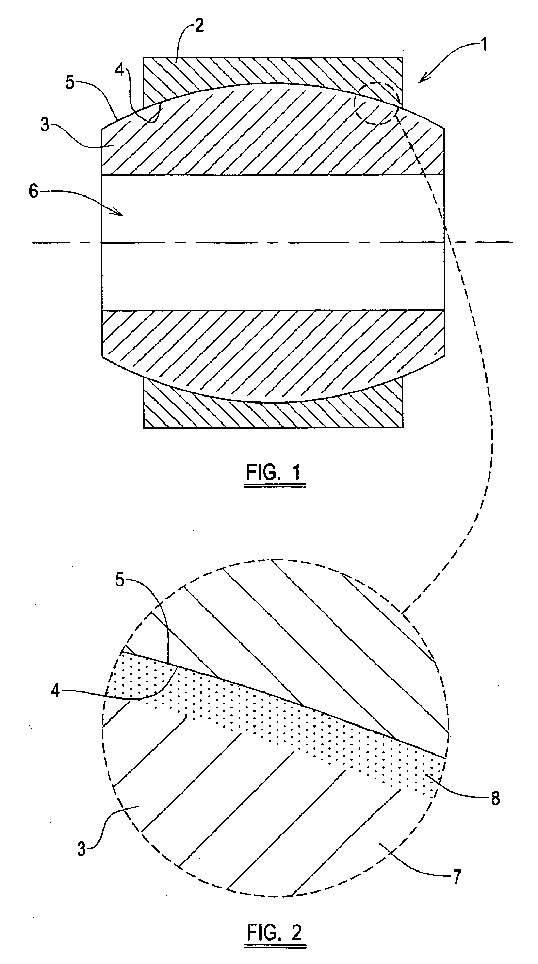

Figure 1 shows an aerospace bearing arrangement 1 not embodying the present invention. The bearing arrangement 1 comprises a bearing housing 2 and a ball 3 held in the housing 2. The housing 2 presents an inner spherical bearing surface 4. The ball 3 presents an outer spherical bearing surface 5. The two spherical bearing surfaces 4, 5 of the housing 2 and ball 3 co-operate with one another to form a bearing interface. The ball 3 may further be provided with a bore 6, as is known in the art.

Figure 2 shows a detail of the interface between the bearing housing 2 and the ball 3 of a bearing 1. The ball 3 comprises a non-ferrous metal structure 7, preferably titanium, which provides a substrate within which an oxygen diffusion zone 8 is provided. Preferably, the oxygen diffusion zone 8 is interstitial with the non-ferrous metal substrate 7. Thus, the oxygen diffusion zone 8 is subterraneal of the surface of the non-ferrous metal substrate 7. However, the oxygen diffusion zone may extend, at least partially, above the underlying surface of the non-ferrous metal structure 7 so as to provide a surface layer.

Alternatively, or additionally, the bearing surface of the housing may be provided with the features of the invention.

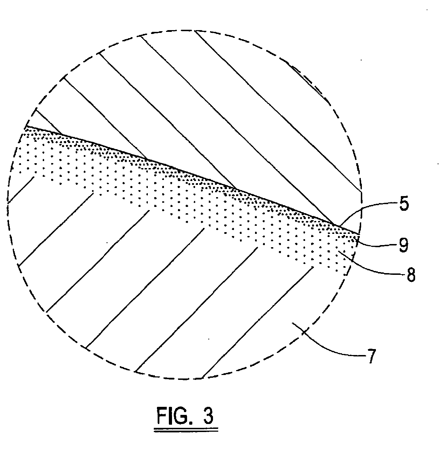

Figure 3 shows a detail of the interface between the bearing housing 2 and ball 3 of another bearing 1 embodying the present invention. The detail in Figure 3 is almost identical to the detail shown in Figure 2 but for the fact that Figure 3 further shows a nitrogen diffusion zone 9 on or within the bearing surface 5 provided by the oxygen diffusion zone 8. The nitrogen diffusion zone may be interstitial with at least a part of the oxygen diffusion zone 8.

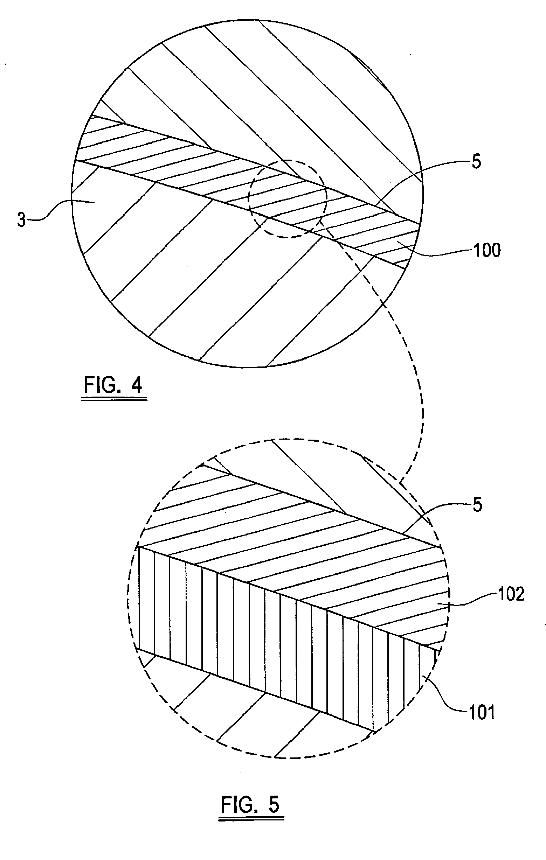

Figure 4 shows a detail of the interface between the bearing housing 2 and ball 3 of another embodiment of the present invention. The structure of the ball 3 may be identical to that shown in either of Figures 2 and 3. Thus, the ball 3 shown in Figure 4 may comprise an oxygen diffusion zone 8 (as shown in Figure 2) or may have both an oxygen diffusion zone 8 and a nitrogen diffusion zone 9 (as shown in Figure 3).

The arrangement shown in Figure 4 is further provided with a coating 100, which may be provided on the surface of the ball 3. The coating may extend partially into the top surface of the underlying substrate. The surface of the coating 100 may provide the bearing surface 5. The coating may comprise a single material, selected from the group titanium nitride, chromium nitride, tungsten carbide graphite, titanium aluminium nitride and chromium aluminium nitride.

Figure 5 shows an alternative arrangement, wherein the coating 100 is comprised of a two-layer coating. As shown in Figure 5, the coating 100 comprises a first coating layer 101, on which is provided a second layer of coating 102. The material of the first coating layer 101 may be selected so as to adhere to the respective underlying diffusion zone (not shown in Figure 5) and the material of the second coating layer 102 is selected so as to provide a good bearing surface 5.

Preferably, the material of the first coating layer 101 is chromium nitride and the material of the second coating layer 102 is tungsten carbide graphite.

In one embodiment, both the ball and housing are provided with an oxygen diffusion zone, a nitrogen diffusion zone and a coating of tungsten carbide graphite (WCC). The composition of the tungsten carbide graphite on one of the ball and the housing may be different to the composition of the tungsten carbide graphite on the other of the ball and housing.

A process for treating a non-ferrous metal component, suitable for manufacturing the aerospace bearing component of the invention, comprises placing the component into a process chamber at an elevated temperature, biasing the component to have a potential capable of attracting ions, introducing oxygen into the chamber at a pressure such that a glow discharge comprising oxygen ions is generated, the process chamber additionally comprising a glow discharge ionisation enhancing means and activating the ionisation enhancing means thereby increasing the charged species density of the glow discharge, the oxygen ions flowing towards the component and colliding with the surface thereof, at least some of which diffuse into the component.

Enhanced glow discharges may be used to carry out oxidation treatment processes on non-ferrous components, such as titanium, aluminium, magnesium, zirconium and their alloys. The enhanced charged species densities in the glow discharge increases the number of the oxygen ions bombarding and penetrating the surface of the component forming oxides therein, and result in surfaces which are hardened, have increased resistance to corrosion, have improved wear resistance and which are relatively smooth without requiring extended processing times.

The treated components are suitable for numerous applications e.g. in aerospace, biomedical and tooling industries.

The glow discharge can be generated by any suitable technique available to the skilled person, e.g. D.C., A.C. or R.F. Applying D.C. by connecting the inside of the processing chamber to earth, thus forming a glow discharge with the negatively biased component, is preferred.

The glow discharge ionisation enhancing means, for example, can be a positively biased electrode inside the chamber, a plasma source having a filament or a hollow cathode, a microwave discharge or a thermionic emission means. Preferably it is a thermionic emission means.

The thermionic emission means may be a negatively biased filament made from any material which can act as a filament at the high temperatures involved in the process. Examples of suitable materials are tungsten and rhenium. However, for reasons of cost, tungsten is the preferred material.

It has been found that the material forming the thermionic emission means can oxidise and eventually fail, possibly before the treatment process has finished. This has been found to be particularly the case when tungsten is used.

Extended lifetimes of filaments being the thermionic emission means have, however, been found to be achievable by employing one or more of a number of methods developed in this invention. For example it is preferable that the diameter of the filament is greater than 1.0 mm. As the electrical resistance of the filament significantly decreases as its diameter increases, the use of thicker filaments requires more power to heat them and obtain sufficient electron emission to sustain the discharge. Therefore, high current power supplies are required to heat the filament at these thicknesses.

The lifetime of such filaments has also been found to be significantly improved when inert gases are added to the oxygen environment, during treatment, such that the partial pressure of oxygen during treatment is less than 75% of the total pressure. Suitable inert gases include argon, krypton, helium, neon, preferably argon. Nitrogen may also be used in combination with these gases.

It has been found that better results are achieved when the overall pressure during oxidation is from 0.1 to 1.0 Pa, e.g. around 0.4 Pa. At these pressures, a greater number of ions will reach the surface of the component with energies near the cathode fall voltage, enhancing the delivery of high energy ions to the surface of the component and enhancing the overall kinetics of the oxidation process.

The component potential (or bias voltage) may be any suitable value, e.g. from -100 to -2000 V, however, further reductions in the surface roughness of the treated components can be achieved by operating the process at a component potential of from -100 to -500 V e.g. -200 V. It is also preferable to operate at relatively low temperatures e.g. from 300°C to 800°C, preferably from 400°C to 700°C, minimising component distortion and microstructural changes.

Typically the objective is to arrange the process parameters such that the oxygen ions collide with and penetrate into the surface of the component. The hardened layer, or hardened case, which results comprises an inner oxygen diffusion layer and an outer oxide layer.

The process may be carried out for as long as is desired (e.g. 0.1 to 100 hours) and the duration is usually governed by the thickness of the hardened case desired. However, the process can be carried out for relatively short periods of time, e.g. from 0.3 to 20 hours, preferably about 4 hours and still provide excellent physical properties at the surface.

Typically thickness of a hardened case may vary from 5 to 300 micrometres, preferably from 20 to 80 micrometres thick, more preferably from 30 to 50 micrometres. The resulting thickness of the hardened case is largely dependent upon operating temperature and duration.

For instance, treating Ti-6Al-4V alloys at 700°C for 4 hours produces hardened cases comprising a 0.7-0.8 micron separate oxide layer, which is mainly TiO₂ rutile, above an oxygen diffusion layer having a depth of about 50 microns.

As noted above, the presence of an oxide layer is undesirable. For example a lack of adhesion can result if the treated component is subsequently coated, especially with a nitride, carbide or carbon nitride coating. However, it has been found that the build-up of this oxide layer can be controlled by judicious selection of operating parameters.

For example it has been found that feeding the oxygen into the chamber by varying its flow rate, e.g. by intermittently slowing or stopping the flow, can greatly reduce the build-up of the oxide layer. Such variation, or 'pulsing' the oxygen flow has also surprisingly been found to prolong the lifetime of the thermionic emission means, e.g. filament allowing filaments of less thickness to be used or to permit longer processing times.

For example, it has been found to be beneficial to have periods of oxygen flow into the chamber separated by periods where no oxygen flows into the chamber. The ratio of the time period when oxygen flows to when it does not flow is called the duty cycle ratio and may be from 0.05 to 0.95. It has been found that a less favourable hardening profile can result if the oxygen flow is stopped for too long. Therefore it is preferred to operate with a duty cycle of from 0.15 to 0.85, preferably from 0.25 to 0.75. Cycle times of pulsing can vary widely and cycle times of less than 60 minutes, e.g. from 20 to 60 minutes have been found acceptable. For example operating with a cycle time of 30 minutes and a duty cycle of 0.50 (i.e. oxygen flow on for 15 minutes then off for 15 minutes) gives good results.

As discussed above, the lifetime of the thermionic emission means, e.g. filament can be extended by having an oxygen partial pressure during the treatment process of less than 75%, the remainder being an inert gas. A low oxygen partial pressure has also been found to reduce the build-up of the oxide layer. In fact, it has been found that oxygen partial pressures may be reduced to below 50%, or even to below 40%, e.g. around 30%, to further reduce build-up of the oxide layer. A currently preferred gas mixture is 30% oxygen and 70% argon in terms of partial pressure.

It has also been found that reducing the oxygen partial pressure still further, or even taking it to zero, at the end of the treatment process can remove any oxide layer which may have previously built up. This is achieved simply by stopping the oxygen flow so that the chamber contains mostly or only inert gas (e.g. argon, krypton, helium, neon or xenon, optionally mixed with nitrogen). This plasma heating step, or "soaking" stage, is believed to allow oxygen in the oxide layer to diffuse into the component whilst ion bombardment of inert gas aids in disruption of the oxide layer. In this stage of the process oxygen partial pressures may be from 0 to 10%, preferably zero, at a temperature of from 400°C to 800°C for a period of 0.3 to 2.0 hours.

Any or all of the above techniques can be employed in any combination in order to tailor the thickness of the oxide layer as desired, or possibly eliminate it entirely.

For example, treating a metal component with pulsed oxygen followed by a period of plasma heating in inert gas can eliminate the separate oxide layer entirely. For instance, it has been found that operating with pulsed oxygen for 165 minutes at a duty cycle ratio of 0.25 or 0.50 with cycle times of 20 or 30 minutes, followed by a plasma heat step in either argon or a mixture of argon and nitrogen for 75 minutes (to give a total process time of 4 hours), gave a treated component with no oxide layer.

As mentioned above, the treated surface of the component may be subsequently coated, e.g. by a physical vapour deposition (PVD) and/or a chemical vapour deposition (CVD) process. It has been found that the surfaces generated in the process of the invention are particularly well suited to such coatings, particularly where it has been carried out such that no oxide coating is present. PVD and/or CVD coatings may be deposited by any known process in the art, e.g. using D.C., A.C. or R.F.

It is possible that such a coating process could follow directly on from the oxidation process in the same process chamber and without exposing the component to the atmosphere in a one-stage process. Alternatively the coating process can be carried out independently in a separate cycle, in a two-stage process.

Combining the oxidation process with such hard ceramic coatings gives synergistic benefits and further increases the load-bearing capacity of the component's surface, minimises elastic and plastic deformation between the coating and the component due to the hardened surface.

The invention will now be illustrated with reference to the following drawings, in which:

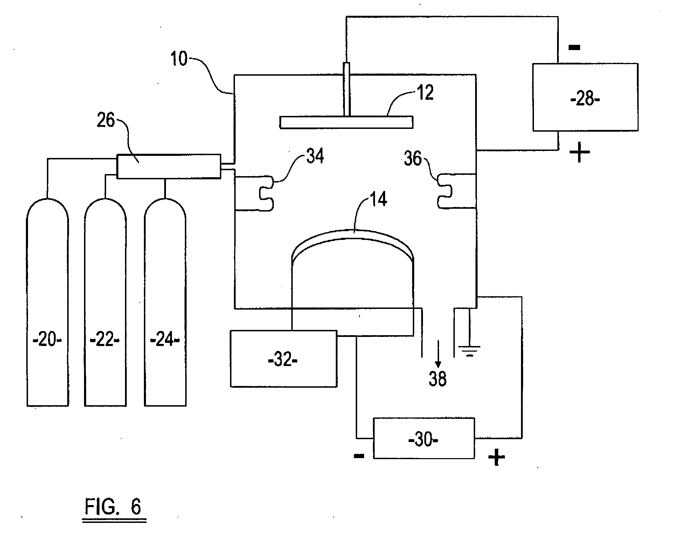

Figure 6 shows a stainless steel process chamber 10 of dimensions 1.0 m x 1.0 m x 1.0 m, (Model No. IP70 available from Tecvac Limited) containing the component to be treated 12, and filament 14 made of tungsten, constituting the thermionic emission means.

Connected to the chamber 10 are three gas cylinders 20, 22, 24 containing oxygen, argon and nitrogen respectively, via a flow control device 26.

A negative bias voltage is applied to the component 12 by a D.C. bias power supply 28. A similar D.C. high current, low voltage power supply 30 is used to negatively bias the filament 14. Also connected to the filament 14 is a heater power supply 32. The chamber 10 also contains radiant heaters 34, 36.

Because the process involves three electrical elements, (the component, the thermionic emission means and the inside of the chamber) the process will be termed triode plasma oxidation (TPO) for convenience.

In use, oxygen and optionally argon, are fed into the chamber 10 and the pressure inside the chamber is maintained at its set point by concurrent use of a diffusion pump 38. A glow discharge occurs due to the potential difference between the inside of the chamber 10 and the component 12 and the pressure of the gas. Sufficient current is passed through the filament 14 to cause thermionic emission, which enhances the energy of the ions in the glow discharge.

As the ions of oxygen and argon are positively charged, they are attracted to the negatively charged component, thereby colliding with its surface. The temperature of the chamber is elevated to such a level that the atoms of metal in the component vibrate sufficiently to allow diffusion of the colliding oxygen within the metal component.

The oxidising stage may be followed by a plasma heating stage where only inert gas is introduced.

### Example 1: TPO with constant oxygen flow: effect of processing temperature

Triode plasma oxidation (TPO) was carried out to harden Ti-6Al-4V test discs (from Titanium International, UK) at three different temperatures (600, 650 and 700°C) for 240 minutes. Oxygen flow was kept constantly on during the process. Ti-6Al-4V test discs having a thickness of 3 mm and a diameter of 30 mm in the annealed condition (384 ± 20 HK_{0.1}) and polished to a surface finish of Rₐ = 0.040 ± 0.007 µm were ultrasonically cleaned in an alkaline solution and placed into a processing chamber (IP70 chamber available from Tecvac Limited).

After an ultimate pressure lower than 5 x 10⁻³ Pa, argon was admitted to the chamber to a pressure of 2.0 Pa to carry out a sputter clean step. The workpiece (test discs) were biased at -1000 V and sputter cleaning was performed for 5 minutes.

A plasma heating step was performed in argon at 0.5 Pa and the workpiece was biased at -200 V. The tungsten filament was biased at - 200 V and the filament heater current was adjusted to yield a current density of 1.5 mA/cm². Plasma heating was carried out until treatment temperature (600 or 650 or 700°C) was achieved. At this current density value, no auxiliary heating (i.e., radiant heating) was required.

After plasma heating, the oxidation process was begun with the argon pressure being readjusted to 0.28 Pa and oxygen admitted to a pressure of 0.12 Pa to yield a total pressure of 0.4 Pa and gas composition of 70% Ar + 30% O₂. Both workpiece and filament biases were kept at -200 V (values already pre-set during plasma heating) and the filament heater current was periodically adjusted to keep a constant workpiece current density of 1.5 mA/cm² throughout the treatment.

Following the oxidation process, treated test discs were cooled by introducing nitrogen into the chamber up to a pressure of 10²Pa. When the test disc temperature fell below 200°C, further nitrogen is added into the chamber until atmospheric pressure (∼ 10⁵ Pa).

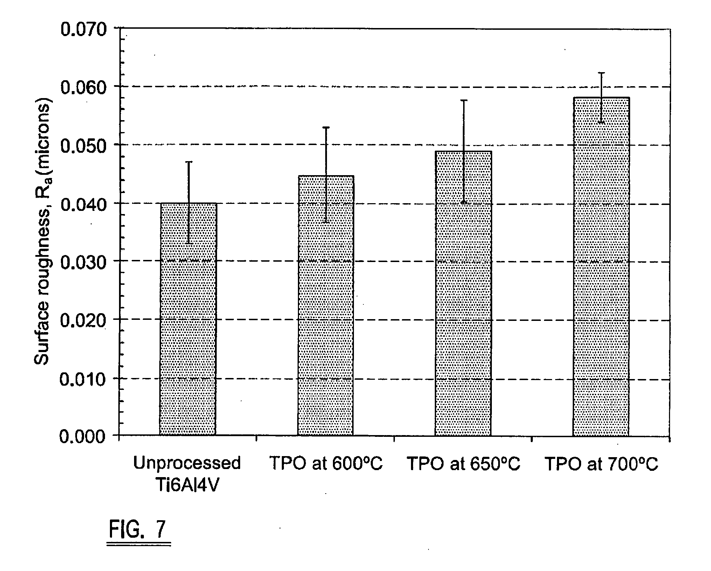

TPO promotes small changes in surface roughness in comparison to the unprocessed, polished Ti-6Al-4V sample (Fig.7). Regardless of TPO temperature, the surface roughness after treatment is still very low (Rₐ < 0.06 µm). As TPO temperature increases, the Rₐ value slightly increases and is about 0.058 µm at 700°C. The difference in Rₐ as TPO temperature increases is only marginal and it is worth noting that the values shown in Fig.7 are statistically similar.

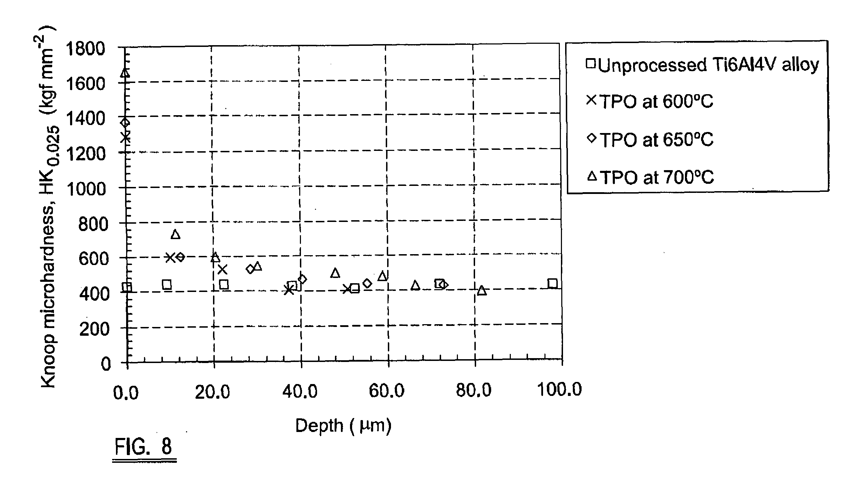

After TPO at several temperatures (600, 650 and 700°C), significant improvements in surface hardness are seen in comparison to unprocessed Ti-6Al-4V (Fig.8). As TPO temperature increases, the measured surface hardness at a given indentation load also increases. This is probably related to changes in oxide layer thickness. At the lowest indentation loads, high hardness values are recorded, suggesting that a hard oxide layer is present. Substantial improvements in surface hardness are still achieved at high indentation loads (e.g., 500 gf and 1000 gf) for the TPO-treated Ti-6Al4V sample at 700°C.

Preferably, an aerospace bearing component embodying the invention has a hardness of over 400HK₀.₀₂₅ (Kgf mm⁻²). Preferably, the hardness is over 400HK within 60µm of the surface. Conveniently, the hardness is over 600HK within 20µm of the surface. Advantageously, the hardness is over 700HK within 10µm of the surface. It will be noted that aerospace bearing components embodying the present invention offer a harder bearing surface than do untreated bearing surfaces.

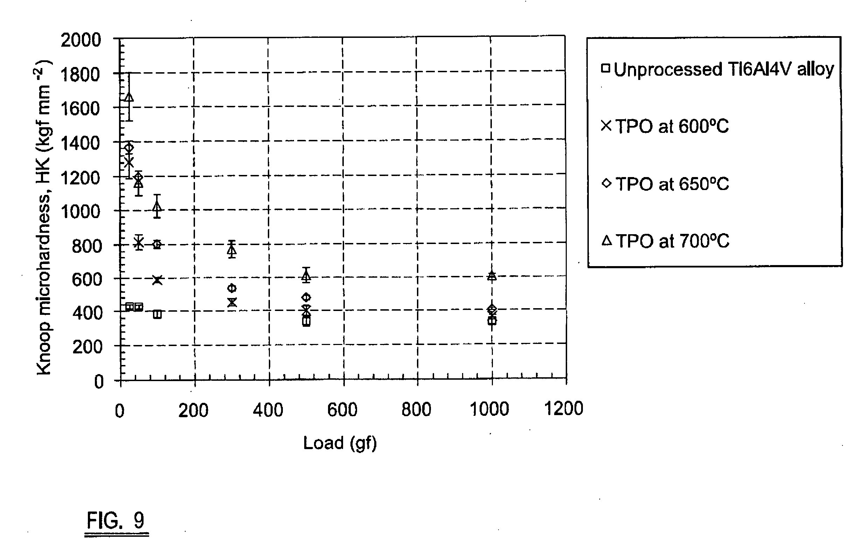

The effect of TPO on hardness profile is shown in Fig.9. After a processing time as short as 240 minutes (4 hours), a hardened layer of approximately 50 µm results at 700°C. As TPO temperature decreases, the thickness of the hardened layer also decreases. For instance, the treatment depth at 600°C is about 30 µm.

Preferably, the hardness is over 400HK for a load up to 1000gf. Conveniently, the hardness is over 500HK for a load up to 600gf. Advantageously, the hardness is over 600HK for a load up to 600gf. Preferably, the hardness is over 600HK for a load up to 300gf. Conveniently, the hardness is over 800HK for a load up to 200gf. Advantageously, the hardness is over 1000HK for a load up to 100gf. Preferably, the hardness is between 1500 and 1800HK for a load of 40gf.

SEM photomicrographs taken at 10 kX show that a dense oxide layer is always formed at the TPO-treated surface, regardless of TPO temperature (Fig.5). As TPO temperature decreases, the thickness of the oxide layer also decreases. Oxide layer thicknesses are 0.7-0.8µm, 0.2-0.3 µm and 0.1-0.2 µm respectively for TPO carried out at 700°C, 650°C and 600°C.

Glancing angle XRD data also indicate that the oxide layer structure changes with TPO temperature. At 600°C, the oxide layer consists of a mixture of TiO₂-anastase and TiO₂-rutile. The data shows that a mixture of TiO₂-ariastase and TiO₂-rutile is still present at 650°C, although TiO₂-rutile is more abundant than at 600°C. At 700°C, TiO₂-anastase peaks are absent, indicating that the oxide layer at the surface is mainly TiO₂-rutile.

### Example 2: TPO with pulsed oxygen flow with plasma heating in inert gas or inert gas and nitrogen glow discharges to suppress top oxide layer

In order to demonstrate the effect of pulsing / plasma heating conditions, four runs were performed at 700°C for a total time of 240 minutes in annealed Ti-6Al-4V test discs, having a surface hardness of (384 ± 20 HK_{0.1}) and surface finish of Rₐ = 0.040 ± 0.007 µm. Discharge parameters (workpiece and filament bias voltages, current density) were also set as described in Example 1 (-200 V, -200 V and 1.5 mA/cm² respectively) for each run. Total pressure was 0.4 Pa during TPO, with argon and oxygen partial pressures of 0.28 and 0.12 Pa respectively. Sputter cleaning and plasma heating were also carried out prior to pulsed TPO as elucidated in Example 1. Instead of keeping the oxygen flow constantly on throughout the treatment, its flow was periodically pulsed whilst the argon flow was kept constant. The duration of this pulsed TPO treatment was 165 minutes. Then a plasma heat step at 700°C was performed immediately after TPO for 75 minutes.

Similarly to TPO, plasma heating can be carried out at a total pressure range of 0.1 to 1.0 Pa, preferably 0.4 Pa. Workpiece bias voltages during plasma heating may vary from -100 to -1000 V, preferably -200 V to minimise surface roughening. Filament heater current is periodically adjusted to keep a constant current density in the workpiece. Current density should be set in the range of 0.1 to 4.0 mA/cm², preferably 1.5 mA/cm². Radiant heaters may be required to achieve treatment temperature if plasma heating is to be performed at very low current densities. Plasma heating temperatures and times may vary from 400-850°C and 0.1 to 100 hours respectively.

In this example, plasma heating was carried out at 700°C and 0.4 Pa total pressure using either (i) argon or (ii) argon + nitrogen discharges. In argon and nitrogen discharges, the gas composition was set at 30% Ar + 70% N₂ (i.e. argon partial pressure of 0.12 Pa and nitrogen partial pressure of 0.28 Pa). During plasma heating both workpiece and filament were biased at -200 V (same parameters used during TPO) and the filament heater current was adjusted to provide a current density of 1.5 mA/cm².

Pulsing during TPO and plasma heating conditions are given in Table 1 for each treatment run.

**Table 1: Summary of pulsing conditions utilised in pulsed TPO treatments followed by plasma heating. Gas mixtures used during plasma heating are also shown.**

| TPO run | TPO duration (mins) | Pulsing conditions during TPO | | Gas composition during plasma heating | Plasma heating duration (mins) | Total treatment duration (mins) |
|---|---|---|---|---|---|---|
| | | Cycle time (mins) | Duty cycle ratio | | | |
| 1 | 165 | 30 | 0.50 | 100 % Ar | 75 | 240 |
| 2 | 165 | 30 | 0.50 | 30% Ar + 70% N₂ | 75 | 240 |
| 3 | 165 | 20 | 0.25 | 100 % Ar | 75 | 240 |
| 4 | 165 | 20 | 0.25 | 30% Ar + 70% N₂ | 75 | 240 |

### Example 3: Triode plasma oxidation followed by coating deposition

As elucidated in Example 2, pulsed TPO followed by a plasma heat step in an inert gas or inert gas and nitrogen gas discharges can produce TPO layers having an oxygen diffusion zone without any top oxide layer. This structure may be desirable if articles are to be coated with some types of PVD or CVD films (e.g. nitrides, carbides and carbon nitrides), as coating adhesion may be limited when these types of films are deposited on oxidised substrates (i.e., having a thin oxide layer at their surface).

In order to illustrate the benefits of TPO and coating deposition, four pulsed TPO treatments followed by plasma heating at 700°C for a total time of 240 minutes as described in Example 2 were applied to Ti-6Al-4V samples which were coated with 1.6 µm thick PVD TiN. This was carried out as a two-cycle process, whereby samples where first TPO-treated in one reactor, then exposed to atmosphere and placed in a PVD reactor for subsequent TiN coating. For these treatment combinations, an increase in load-bearing capacity of the TiN-coated and triode plasma oxidised Ti-6Al-4V article is expected to occur. This duplex-treated Ti-6Al-4V sample should withstand higher loads without failing, as elastic and plastic deformation of the titanium alloy substrate is greatly minimised by hard, 30 to 50 µm deep oxygen diffusion layers.

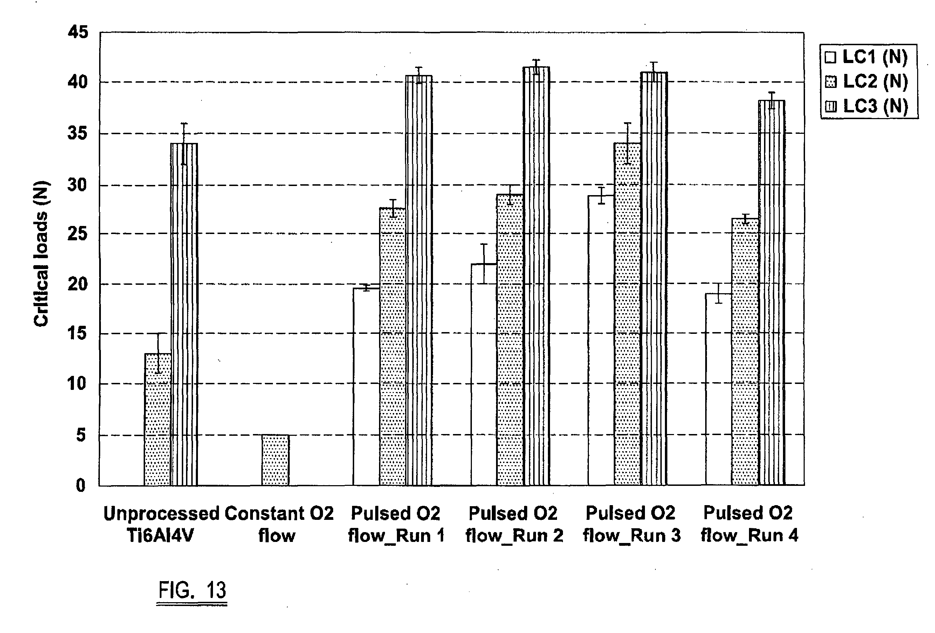

Scratch adhesion tests were performed at an increasing load rate of 10 N/min, table speed of 10 mm/min. and pre-load of 5 N. Scratch test results (Fig.13) show that high critical loads are obtained when TiN is deposited onto TPO layers without a top oxide layer (Pulsed TPO runs 1, 2, 3 and 4). However, TiN on Ti-6Al-4V subjected to standard TPO (i.e., constant oxygen flow), which has a top TiO₂-rutile oxide layer (see Example 1), fails adhesively at the 5 N pre-load. The first failure mode of TiN on unprocessed Ti-6Al-4V is adhesive (note that no L_{C1} value is recorded). It is clear that TiN on TPO without a top oxide layer (Runs 1, 2, 3 and 4) exhibits significantly higher critical loads than its non-duplex counterpart (TiN coating on 'unprocessed' Ti-6Al-4V alloy). This result indicates that (i) better coating/substrate adhesion is achieved when the TiN coating is deposited onto the hardened (TPO-treated) Ti-6Al-4V substrate without a top oxide layer and (ii) TiN on TPO-treated Ti-6Al-4V without a top oxide layer exhibits higher load-bearing capacity than its non-duplex (TiN on unprocessed Ti-6Al-4V) counterpart.

Aerospace bearing components embodying the present invention offer better wear resistance than known aerospace bearings. They therefore have a longer life than known aerospace bearings and may be used for longer periods and in heavier applications before needing to be replaced.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An aerospace bearing component (1) of a substantially non-ferrous metal, the component (1) comprising:
an oxygen diffusion zone (8) near its surface;
a nitrogen diffusion zone (9) on or within the surface, on top of the oxygen diffusion zone (8), wherein at least a part of the nitrogen diffusion zone (9) is interstitial with at least a part of the oxygen diffusion zone (8); and
a coating (100) provided on the surface to provide a bearing surface (5), the coating (100) comprising at least one of titanium nitride, chromium nitride, tungsten carbide graphite, titanium aluminium nitride and chromium aluminium nitride.

2. An aerospace bearing component (1) according to claim 1, wherein the depth of the diffusion zone(s) (8, 9) is in the range of 21 to 100µm.

3. An aerospace bearing component (1) according to any preceding claim, wherein the depth of the coating (100) is in the range of 0.1µm to 50µm.

4. An aerospace bearing component (1) according to any preceding claim, wherein the coating comprises a first layer (101) of coating, on which is a provided a second layer (102) of coating.

5. An aerospace bearing component (1) according to claim 4, wherein the material of the first coating layer (101) is selected so as to adhere to the respective underlying diffusion zone (9) and the material of the second coating layer (102) is selected so as to provide a good bearing surface.

6. An aerospace bearing component (1) according to claim 5, wherein the material of the first coating layer (101) is one of chromium nitride (CrN), titanium nitride (TiN) and chromium aluminium nitride (CrAIN); and the material of the second coating layer (102) is tungsten carbide graphite (WCC).

7. An aerospace bearing component (1) according to any preceding claim, wherein the coating (100) comprises at least one of a PVD and CVD coating.

8. An aerospace bearing component (1) according to any preceding claim, having a surface roughness in the range of 0.1 to 0.7 Ra.

9. An aerospace bearing component (1) according to any preceding claim, having a hardness above 400 HK.

10. An aerospace bearing (1) comprising a housing (2) and a ball (3) held within the housing (2), at least one of the housing (2) and ball (3) comprising an aerospace bearing component (1) according to any preceding claim.

11. A bearing arrangement (1) having at least two aerospace components, the bearing surface of one component being in contact with the bearing surface of another component, wherein the at least two aerospace components each comprise an aerospace bearing component according to any of claims 1 to 9.

## Patentansprüche

1. Flugzeuglagerelement (1) aus einem im Wesentlichen Nichteisenmetall, wobei das Element (1) umfasst:
eine Sauerstoffdiffusionszone (8) nahe seiner Oberfläche;
eine Stickstoffdiffusionszone (9) auf oder in der Oberfläche oben auf der Sauerstoffdiffusionszone (8), wobei zumindest ein Teil der Stickstoffdiffusionszone (9) mit zumindest einem Teil der Sauerstoffdiffusionszone (8) interstitiell ist; und
einer Beschichtung (100), die auf der Oberfläche vorgesehen ist, um eine Lagerfläche (5) bereitzustellen, wobei die Beschichtung (100) von Titannitrid, Chromnitrid, Wolframkarbidgraphit, Titanaluminiumnitrid und Chromaluminiumnitrid zumindest eines umfasst.

2. Flugzeuglagerelement (1) nach Anspruch 1, wobei die Tiefe der Diffusionszone(n) (8, 9) im Bereich von 21 bis 100 µm liegt.

3. Flugzeuglagerelement (1) nach irgendeinem vorhergehenden Anspruch, wobei die Tiefe der Beschichtung (100) im Bereich von 0,1 µm bis 50 µm liegt.

4. Flugzeuglagerelement (1) nach irgendeinem vorhergehenden Anspruch, wobei die Beschichtung eine erste Schicht (101) der Beschichtung umfasst, auf der eine zweite Schicht (102) der Beschichtung vorgesehen ist.

5. Flugzeuglagerelement (1) nach Anspruch 4, wobei das Material der ersten Beschichtungsschicht (101) so ausgewählt ist, dass es an der jeweiligen darunterliegenden Diffusionszone (9) haftet, und das Material der zweiten Beschichtungsschicht (102) so ausgewählt ist, dass es eine gute Lagerfläche bereitstellt.

6. Flugzeuglagerelement (1) nach Anspruch 5, wobei das Material der ersten Beschichtungsschicht (101) Chromnitrid (CrN), Titannitrid (TiN) oder Chromaluminiumnitrid (CrAIN) ist; und das Material der zweiten Beschichtungsschicht (102) Wolframkarbidgraphit (WCC) ist.

7. Flugzeuglagerelement (1) nach irgendeinem vorhergehenden Anspruch, wobei die Beschichtung (100) zumindest eine PVD- oder CVD-Beschichtung umfasst.

8. Flugzeuglagerelement (1) nach irgendeinem vorhergehenden Anspruch, das eine Oberflächenrauigkeit im Bereich von 0,1 bis 0,7 Ra aufweist.

9. Flugzeuglagerelement (1) nach irgendeinem vorhergehenden Anspruch, das eine Härte von über 400 HK aufweist.

10. Flugzeuglager (1), umfassend ein Gehäuse (2) und eine Kugel (3), die in dem Gehäuse (2) gehalten ist, wobei zumindest das Gehäuse (2) oder die Kugel (3) ein Flugzeuglagerelement (1) nach irgendeinem vorhergehenden Anspruch umfasst.

11. Lageranordnung (1) mit zumindest zwei Flugzeugelementen, wobei die Lagerfläche des einen Elements mit der Lagerfläche des anderen Elements in Kontakt ist, wobei die zumindest zwei Flugzeugelemente jeweils ein Flugzeuglagerelement nach irgendeinem der Ansprüche 1 bis 9 umfassen.

## Revendications

1. Un composant de palier aérospatial (1) en métal pour l'essentiel non ferreux, le composant (1) comprenant :
une zone de diffusion d'oxygène (8) près de sa surface ;
une zone de diffusion d'azote (9) sur ou dans la surface, au-dessus de la zone de diffusion d'oxygène (8), dans laquelle au moins une partie de la zone de diffusion d'azote (9) est interstitielle avec au moins une partie de la zone de diffusion d'oxygène (8) ; et
un revêtement (100) sur la surface de façon à disposer d'une surface de palier (5), le revêtement (100) se composant d'au moins un des matériaux suivants : nitrure de titane, nitrure de chrome, graphite de carbure de tungstène, nitrure d'aluminium de titane et nitrure d'aluminium de chrome.

2. Un composant de palier aérospatial (1) selon la revendication 1, dans lequel l'épaisseur de la ou des zones de diffusion (8, 9) se situe entre 21 et 100 µm.

3. Un composant de palier aérospatial (1) selon n'importe laquelle des revendications précédentes, dans lequel l'épaisseur du revêtement (100) se situe entre 0,1 µm et 50 µm.

4. Un composant de palier aérospatial (1) selon n'importe laquelle des revendications précédentes, dans lequel le revêtement se compose d'une première couche (101) de revêtement, sur laquelle se trouve une deuxième couche (102) de revêtement.

5. Un composant de palier aérospatial (1) selon la revendication 4, dans lequel le matériau de la première couche de revêtement (101) est sélectionné de façon à adhérer à la zone de diffusion sous-jacente respective (9) et le matériau de la deuxième épaisseur de revêtement (102) est sélectionné de façon à offrir une bonne surface de palier.

6. Un composant de palier aérospatial (1) selon la revendication 5, dans lequel le matériau de la première couche de revêtement (101) est un des matériaux suivants : nitrure de chrome (CrN), nitrure de titane (TiN) et nitrure d'aluminium de chrome (CrAlN) ; et le matériau de la deuxième couche de revêtement (102) est du graphite de carbure de tungstène (WCC).

7. Un composant de palier aérospatial (1) selon n'importe laquelle des revendications précédentes, dans lequel le revêtement (100) se compose d'au moins un revêtement en PVD et en CVD.

8. Un composant de palier aérospatial (1) selon n'importe laquelle des revendications précédentes, ayant une rugosité de surface située entre 0,1 et 0,7 Ra.

9. Un composant de palier aérospatial (1) selon n'importe laquelle des revendications précédentes, ayant une dureté supérieure à 400 HK.

10. Un palier aérospatial (1) se composant d'un logement (2) et d'une bille (3) maintenue dans le logement (2), au moins le logement (2) ou la bille (3) comprenant un composant de palier aérospatial (1) selon n'importe laquelle des revendications précédentes.

11. Un ensemble palier (1) ayant au moins deux composants aérospatiaux, la surface de palier d'un composant étant en contact avec la surface de palier d'un autre composant, dans lequel les au moins deux composants aérospatiaux comportent chacun un composant de palier aérospatial selon n'importe laquelle des revendications 1 à 9.
